# NEUE EUROPÄISCHE PATENTSCHRIFT

(11) **EP 2 311 329 B2**
(45) Veröffentlichungstag und Bekanntmachung des Hinweises auf die Entscheidung über den Einspruch: **15.06.2022**
(45) Hinweis auf die Patenterteilung: 20.04.2016
(21) Anmeldenummer: 10186386.8
(22) Anmeldetag: 04.10.2010
(51) Int. Cl.: A24C 5/35

(54) **Fördern von stabförmigen Artikeln der Tabak verarbeitenden Industrie**
Feeding of rod-shaped articles from the tobacco processing industry
Transport d'articles en forme de tige de l'industrie de traitement du tabac

(30) Priorität: 09.10.2009 DE 102009048967
(43) Veröffentlichungstag der Anmeldung: 20.04.2011
(73) Patentinhaber: Hauni Maschinenbau GmbH, 21033 Hamburg (DE)
(72) Erfinder: Selbach, Jörg, 21031, Hamburg (DE); Folger, Manfred, 21035, Hamburg (DE); Plähn, Dieter, 21357, Barum (DE); Oesterling, Thomas, 21029, Hamburg (DE)
(74) Vertreter: Seemann & Partner Patentanwälte mbB

(56) Entgegenhaltungen:
- DE-C- 871 263
- DE-C2- 3 528 385
- GB-A- 2 104 858
- US-A- 3 633 735
- US-A- 4 147 247

## Beschreibung

Die Erfindung betrifft eine Einrichtung zum Fördern von stabförmigen Artikeln der Tabak verarbeitenden Industrie, insbesondere Zigaretten oder Filterstäbe, mit einem ersten Förderer zum queraxialen Fördern von Artikeln in einem einlagigen Strom und einem in Förderrichtung stromab angeordneten zweiten Förderer zum queraxialen Fördern von Artikeln in einem mehrlagigen Strom, wobei zwischen dem ersten Förderer und dem zweiten Förderer ein Transferbereich mit einer ortsfesten Führungswand ausgebildet ist.

Ferner betrifft die Erfindung eine Anlage der Tabak verarbeitenden Industrie.

In EP-B-0 692 201 sind eine Vorrichtung und ein Verfahren zum Fördern einer Serie aufeinanderfolgender einzelner und stabförmiger Artikel der Tabak verarbeitenden Industrie in einen Massenstrom aus übereinander liegenden Artikeln beschrieben.

Ferner sind in DE-C-35 28 385 eine Vorrichtung und ein Verfahren zum Fördern stabförmiger Artikel der Tabak verarbeitenden Industrie offenbart, wobei von einer Fördertrommel stabförmige Artikel an einer Bandfördereinrichtung einlagig abgegeben werden, wobei nachfolgend die stabförmigen Artikel anschließend in einen Massenstrom überführt werden.

Ausgehend von diesem Stand der Technik besteht die Aufgabe der Erfindung darin, die Übergabe von fertig hergestellten stabförmigen Artikeln an einen Massenstrom zu verbessern, wobei insbesondere beim Anfahren einer Maschine querliegende Artikel bei der Bildung eines Massenstroms verhindert werden sollen.

Gelöst wird diese Aufgabe durch eine Einrichtung bzw. Anordnung zum Fördern von stabförmigen Artikeln der Tabak verarbeitenden Industrie, insbesondere Zigaretten bzw. Filterzigaretten oder Filterstäben, mit einem ersten Förderer zum queraxialen Fördern von Artikeln in einem einlagigen Strom und einem in Förderrichtung stromab angeordneten zweiten Förderer zum queraxialen Fördern von Artikeln in einem mehrlagigen Strom, wobei zwischen dem ersten Förderer und dem zweiten Förderer ein Transferbereich mit einer ortsfesten Führungswand zwischen dem ersten und dem zweiten Förderer ausgebildet ist, die dadurch weitergebildet wird, dass im Transferbereich ein Federmaterialstreifen und ein Gegenlager für den Federmaterialstreifen vorgesehen sind, wobei der Federmaterialstreifen in der Anfangsposition im Zusammenwirken mit der Führungswand einen Kanal oder einen temporären Zwischenraum zur Aufnahme von einer einlagigen Reihe queraxial hintereinander angeordneter Artikel ausbildet und der Federmaterialstreifen in einer Arbeitsposition im Kontakt mit dem mehrlagigen Strom an das Gegenlager sich anlegt, wobei der erste Förderer als Fördertrommel ausgebildet ist.

Die Erfindung beruht auf dem Gedanken, dass an der Ausgangsseite einer Herstellmaschine, insbesondere Filteransetzmaschine, einlagig geförderte, queraxial hintereinander angeordnete stabförmige Artikel der Tabak verarbeitenden Industrie, insbesondere Filterzigaretten, von einer Fördertrommel, insbesondere einzeln, abgegeben werden, wobei die abgegebenen Artikel nachfolgend einen mehrlagigen Artikelmassenstrom mit längsaxial parallel zueinander angeordneten Artikeln bilden und der Artikelmassenstrom in queraxialer Richtung, d.h. senkrecht zur Längsausrichtung der Artikel, auf einem Förderer, z.B. einem Bandförderer oder dergleichen, linear gefördert wird. Typischerweise beträgt die Höhe eines Artikelmassenstroms ein Mehrfaches des Durchmessers eines einzelnen stabförmigen Artikels bzw. einer einzelnen Filterzigarette.

Hierzu werden nach der Herstellung von Filterzigaretten beispielsweise an einer Filteransetzmaschine die fertig hergestellten Filterzigaretten in einen Massenstrom auf einem Förderer zu einem Zigarettenspeicher oder zu einer Weiterverarbeitungsmaschine, beispielsweise einer Packmaschine, gefördert.

Der Vorteil der Erfindung besteht darin, dass von einem ersten Förderer die queraxial hintereinander angeordneten Artikel im einlagigen Strom einzeln in den Transferbereich abgegeben werden, wobei im anschließenden Transferbereich eine Art Zwischenraum mit einem variablen anpassbaren Volumen ausgebildet wird. Beim Anfahren einer Herstellmaschine bzw. Filteransetzmaschine sind noch keine Zigaretten hergestellt, so dass dementsprechend auch kein Massenstrom auf dem zweiten (Massenstrom-)Förderer vorliegt. Daher wird zunächst mittels des flexiblen Federmaterialstreifens und der ortsfesten, vorzugsweise konkav ausgebildeten Führungswand eine Art Kanal von der Abgebestelle bzw. von dem Abgabepunkt des ersten Förderers zum zweiten nachgeordneten Förderer bzw. Bandförderer ausgebildet, wobei durch die Ausbildung des anfänglich vorhandenen Kanals durch die Führungswand und den Federmaterialstreifen ein Querliegen von den angeförderten und abgegebenen stabförmigen Artikeln verhindert wird. Hierdurch wird eine definierte seitliche, queraxiale Führung der Artikel in der Anfangsphase bzw. Startphase einer Maschine ausgebildet.

Durch die weitere Produktion, beispielsweise von Filterzigaretten, werden mehr und mehr Filterzigaretten an den zweiten Förderer bzw. Massenstromförderer abgegeben, wodurch sich der Federmaterialstreifen in Kontakt mit dem sich aufbauenden Massenstrom von der ortsfesten Führungswand entfernt, wodurch der Federmaterialstreifen aus seiner Anfangsposition bzw. im entspannten Zustand, die auch als Ruheposition bezeichnet wird, durch die Bildung von längsaxial parallel angeordneten Artikeln aufeinander und nebeneinander zu einem Artikelmassenstrom in Kontakt mit den oben aufliegenden Artikeln gebogen wird, bis der Federmaterialstreifen an dem für ihn vorgesehenen Gegenlager anliegt. Hierbei ist bei laufender Produktion ein Massenstrom mit einer maximalen Höhe ausgebildet, wobei durch das gebildete Artikelpaket der Federmaterialstreifen in seiner Arbeitsposition an dem Gegenlager anliegt.

Ein weiterer Vorteil der Erfindung besteht darin, dass durch die Kombination des Federmaterialstreifens und des Gegenlagers querliegende stabförmige Artikel bei der Ausbildung des Massenstroms, insbesondere beim Anfahren der Maschine, verhindert werden, wobei zusätzlich durch die definierte Führung und die rückstellenden Kräfte des Federmaterialstreifens die Packungsdichte des Artikelpakets erhöht wird, wobei gleichzeitig der längsaxiale Versatz zwischen den einzelnen Artikeln im Artikelmassenstrom verringert wird. Darüber hinaus wird auch die Höhe des Artikelstrom vergleichmäßigt.

Bei einem Anfahren der Maschine ist noch kein Massenstrom gebildet, wobei durch den (entspannten) Federmaterialstreifen im Zusammenwirken mit der konkaven Führungswand temporär ein Führungskanal ausgebildet wird. Der temporäre Führungskanal ist dabei zwischen dem Abgabepunkt der einlagig geförderten Artikel und dem stromab angeordneten zweiten Förderer bzw. Transportband ausgebildet, wobei nach einer ersten Beschickung des Kanals der Federmaterialstreifen mit zunehmender Beschickung geöffnet bzw. bewegt wird, wodurch der Zwischenraum zwischen dem ersten Förderer und dem zweiten Förderer vergrößert wird und der temporäre Kanal geöffnet wird.

Darüber hinaus wird die Einrichtung vorteilhafterweise dadurch weitergebildet, dass der temporäre Kanal zwischen Führungswand und dem Federmaterialstreifen in der Anfangsposition im unbefüllten Zustand des Kanals sich zwischen dem ersten und dem zweiten Förderer verjüngt, wodurch der temporäre Kanal bezogen auf die Förderrichtung der Artikel im Querschnitt sichelförmig ausgebildet ist. Insbesondere sind die unteren Endpunkte des Federmaterialstreifens und der konkaven Führungswand einander angenähert oder berühren sich, während auf der Eintrittsseite der Artikel in den Kanal die konkave Führungswand und der Federmaterialstreifen voneinander beabstandet sind.

Insbesondere ist der Federmaterialstreifen in Längsrichtung biegbar, während der Federmaterialstreifen in Querrichtung eine größere Steifigkeit aufweist als in Längsrichtung. Insbesondere entspricht die Breite in Querrichtung des Federmaterialstreifens der Breite der zu fördernden bzw. geförderten Artikel der Tabak verarbeitenden Industrie. In einer weiteren Ausgestaltung ist der Federmaterialstreifen einstückig ausgebildet.

Darüber hinaus zeichnet sich eine Weiterbildung der Einrichtung dadurch aus, dass das Gegenlager für den Federmaterialstreifen steifer als der Federmaterialstreifen ausgebildet ist, wodurch der Federmaterialstreifen sich eng an das Gegenlager anlegen kann und somit die Bewegung des Federmaterialstreifens nach Ausbildung eines Artikelmassenstroms begrenzt ist.

Gemäß einer bevorzugten Ausführungsform ist außerdem vorgesehen, dass der Federmaterialstreifen vorgespannt oder vorspannbar ist.

Außerdem ist insbesondere das Gegenlager gekrümmt ausgebildet und/oder an einem freien Ende abgewinkelt ausgebildet. Hierzu weist das Gegenlager an seinem freien Ende eine Art Schenkel auf. Darüber hinaus ist das Gegenlager für den Federmaterialstreifen mit seinem anderen Ende im Bereich der Abgabestelle der einlagig geförderten Artikel angeordnet.

Des Weiteren ist in einer bevorzugten Ausführungsform vorgesehen, dass das Gegenlager verschwenkbar ausgebildet ist, wobei insbesondere wenigstens ein Anschlagpunkt zur Begrenzung der Schwenkbewegung des Gegenlagers vorgesehen ist. Hierdurch wird die Schwenkbewegung des Gegenlagers begrenzt, wobei durch den Kontakt des Gegenlagers mit dem Federmaterialstreifen bzw. mit dem gebildeten Artikelmassenstrom der Artikelmassenstrom an seiner Oberseite glättet. Darüber hinaus ist es durch die Ausbildung eines abgewinkelten Schenkels am freien Ende des Gegenlagers möglich, dass keine hergestellten Zigaretten auf die Oberseite des Gegenlagers gelangen.

Bevorzugterweise besteht der Federmaterialstreifen aus Metall und/oder ist das Gegenlager als Streifen, vorzugsweise aus Metall, ausgebildet. Hierbei ist das Gegenlager, beispielsweise in Form eines Streifenblechs, das insbesondere mit einer Krümmung vorgeformt ist, ausgebildet.

Vorzugsweise ist der zweite Förderer als Bandförderer ausgebildet.

Darüber hinaus ist es in einer Ausgestaltung der Einrichtung bzw. Anordnung bevorzugt, dass der Federmaterialstreifen seitlich durch zwei Abdeckungen begrenzt ist, wobei insbesondere der horizontale Abstand zwischen den Abdeckungen in Förderrichtung der stabförmigen Artikel sich vergrößert. Dadurch wird eine Art sich nach unten öffnender Trichter ausgebildet, wodurch im Zusammenwirken mit dem Federmaterialstreifen und der Führungswand beim Anfahren der Maschine bei Bildung eines mehrlagigen Artikelstroms der axiale Versatz zwischen den einzelnen stabförmigen Artikeln herabgesetzt wird.

Ferner wird die Aufgabe gelöst durch eine Anlage der Tabak verarbeitenden Industrie mit einer voranstehend beschriebenen Einrichtung. Hierbei weist die Anlage insbesondere eine Herstellmaschine, vorzugsweise Filteransetzmaschine und einen ausgangsseitigen Massenstromförderer auf. Zur Vermeidung von Wiederholungen wird auf die obigen Ausführungen ausdrücklich verwiesen.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird.
Es zeigen:
Fig. 1 eine teilweise schematische Seitenansicht einer Einrichtung zum Fördern stabförmiger Artikel und
Fig. 2 eine schematische Frontansicht der Einrichtung in der Ausgangsseite.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

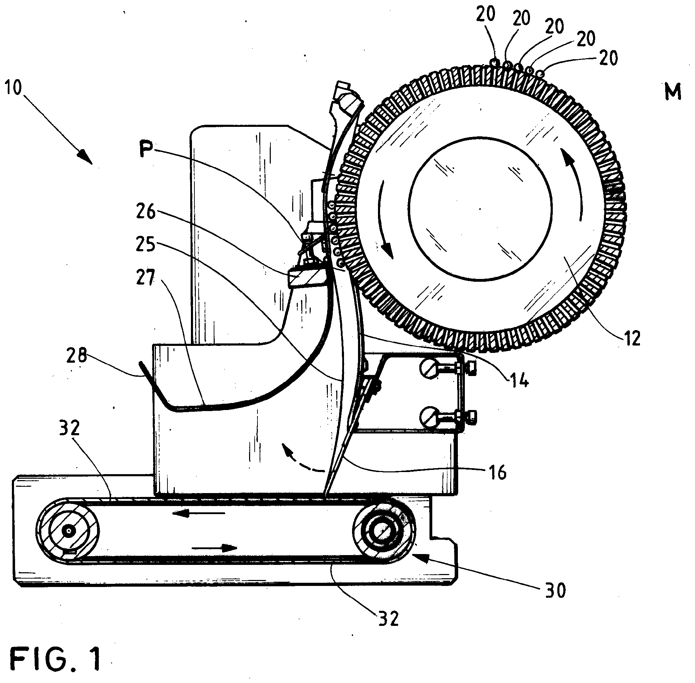

In Fig. 1 ist schematisch eine Einrichtung 10 zum Fördern von Filterzigaretten in einer Seitenansicht dargestellt. Von einer schematisch bezeichneten und aus Gründen der Darstellbarkeit nicht weiter dargestellten Filteransetzmaschine M werden an der Ausgangsseite bzw. am stromabwärtigen Ende der Filteransetzmaschine M fertig hergestellte Filterzigaretten 20 von einer Fördertrommel 12 queraxial hintereinander in einem einlagigen Strom zu einem Abgabepunkt P gefördert, an dem die Filterzigaretten 20 einzeln durch Abschalten von Unterdruck in den Aufnahmemulden der Fördertrommel 12 abgegeben werden. Beispielsweise ist unter der Bezeichnung MAX eine Filteransetzmaschine der HAUNI Maschinenbau AG bekannt.

Nach der Abgabe der Filterzigaretten 20 im Abgabepunkt P werden die Filterzigaretten 20 entlang einer konkav ausgebildeten Führungswand 14 geführt bzw. bewegt, wobei die Führungswand 14 im unteren Bereich mit einem geraden Führungswandabschnitt 16 ausgebildet ist. Der gerade Führungswandabschnitt 16 schließt an die konkav ausgebildete Führungswand 14 an.

Am untere Ende des geraden Führungswandabschnitts 16 umfasst die Einrichtung 10 einen Bandförderer 30, der ein oder mehr endlos flexible Förderbänder 32 oder -ketten als flexible Elemente aufweist, die dazu dienen, einen auf den Förderbändern 32 ausgebildeten Massenstrom aus Filterzigaretten 20 zu einem Zwischenspeicher oder einer Weiterverarbeitungsmaschine zu fördern. Hierbei werden auf den Förderbändern 32 längsaxial nebeneinander ausgerichtete und übereinander sowie nebeneinander angeordnete Zigaretten in einem mehrlagigen Massenstrom aufgrund der Förderrichtung der Förderbänder 32 von rechts nach links aus der Einrichtung 10 herausgefördert. Hierbei ist die längsaxiale Ausrichtung der Artikel senkrecht zur Zeichenebene.

Im Bereich des Abgabepunktes P ist in einem vorbestimmten Abstand zur Außenseite der Fördertrommel 12 ein Ende eines Federblechs 25 angeordnet, wobei sich das Federblech 25 in Förderrichtung der Filterzigaretten in Längsrichtung erstreckt. Das Federblech 25 ist als Federmaterialstreifen ausgebildet und erstreckt sich in entspanntem Zustand des Federblechs 25 bzw. in einer Anfangsposition vom Abgabepunkt P bis zur Oberseite der Förderbänder 32. Hierbei verläuft das Federblech 25 auf konkav gebogene Weise neben der Führungswand 14 und dem Führungswandabschnitt 16 nach unten. Das Federblech 25 ist im Bereich des Abgabepunktes P fixiert oder schwenkbar angebracht.

Beim Anfahren der Filteransetzmaschine M ist noch kein Massenstrom an Filterzigaretten auf den Förderbändern 32 des zweiten Förderers bzw. Bandförderers 30 vorhanden, so dass der Zwischenraum zwischen dem entspannten Federblech 25 in der Anfangsposition und der ortsfesten Führungswand 14 zusammen mit dem Führungswandabschnitt 16 leer ist. Beim Start der Filteransetzmaschine M werden die "ersten" Filterzigaretten 20 in den zwischen dem entspannten Federblech 25 und der ortsfesten Führungswand 14 zusammen mit dem Führungswandabschnitt 16 einlagig die Filterzigaretten in diesen Zwischenraum hineingefördert, wobei das flexible Federblech 25 beim Anfahren bzw. Start der Filteransetzmaschine M den Zwischenraum queraxial zur Förderrichtung der einlagig hineingeförderten Filterzigaretten 20 begrenzt.

Mit zunehmender Produktionszeit nimmt die Anzahl der von der Fördertrommel 12 abgeworfenen Zigaretten zu, wodurch das Federblech 25 unter Beibehaltung eines Kontakts mit den an dem Federblech 25 anliegenden Zigaretten gebogen bzw. unter Spannung zurückgebogen wird, so dass der anfangs gebildete temporäre Zwischenraum geöffnet wird und sich das freie Ende des Federblechs 25 nach oben bewegt bzw. gedrückt wird. Hierbei legt sich das freie Ende des Federblechs 25 an ein als Gegenlager ausgebildetes Pendelblech 27 an dessen Unterseite an.

Das Pendelblech 27 ist im Bereich des Abwurfpunktes P schwenkbar gelagert und verfügt über ein Gewicht 26, wodurch aufgrund der Hebelwirkung mittels des Pendelblechs 27 und des schwenkbar gelagerten Pendelblechs 27 Druck auf die Oberseite des auf den Förderbändern 32 gebildeten Massenstroms ausgeübt wird. Das Pendelblech 27 ist gekrümmt ausgebildet und weist an seinem freien Ende einen nach oben abgewinkelten Blechschenkel 28 auf, wobei die Länge des Blechschenkels 28 derart bestimmt ist, dass bei einem Transport eines mehrlagigen Massenstroms auf den Förderbändern 32 keine Zigaretten auf die Rückseite bzw. die Oberseite des Pendelblechs 27 gelangen.

Mittels des Pendelblechs 27 und seiner gekrümmten Fläche wird der Bewegungsraum der von der Fördertrommel 12 abgeworfenen Zigaretten begrenzt. Gleichzeitig wird durch die im Bereich des Übergangs zum Blechschenkel 28 ausgebildete gerade oder nahezu geradlinige Unterseite des Pendelblechs 27 die Oberfläche des Massenstroms geglättet, wobei gleichzeitig der Massenstrom aus hergestellten Filterzigaretten geformt wird. Hierdurch bildet das Pendelblech 27 ein Strömungsprofil, so dass die angeförderten Zigaretten ihre von der Fördertrommel 12 herrührende Bewegungsenergie im Übergangsbereich abbauen und in eine der Produktionsgeschwindigkeit und Massenstromhöhe entsprechende Bewegung übergehen.

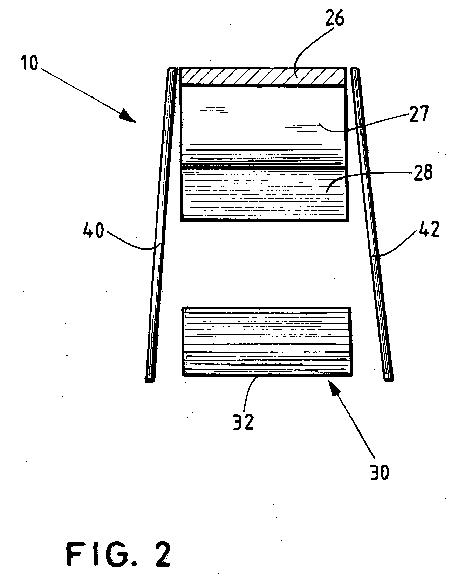

In Fig. 2 ist schematisch eine Frontansicht der Einrichtung 10 im Ausschnitt dargestellt. Die Förderrichtung des auf dem Förderband 32 geförderten Artikelmassenstroms ist senkrecht zur Zeichenebene ausgebildet.

Aus Fig. 2 geht hervor, dass der Übergangsbereich der von der Fördertrommel 12 (vgl. Fig. 1) abgegebenen Filterzigaretten in den Übergangsbereich zu dem Massenstromförderer 30 auf beiden Seiten durch schräg angestellte Abdeckungen 40, 42 begrenzt ist. Die Abdeckungen 40, 42 sind mit einer Neigung zur Vertikalen ausgebildet, so dass die Abdeckungen 40, 42 bezogen auf die vertikale Förderrichtung der Filterzigaretten von unten nach oben trichterförmig angeordnet sind, wobei sich die horizontalen Abstände zwischen den Abdeckungen 40 und 42 vergrößern.

Durch die trichterartige Vergrößerung des Übergabebereichs zwischen der Fördertrommel 12 und dem Bandförderer 30 wird bei der einzelnen Abgabe der Filterzigaretten an den Übergangsbereich der längsaxiale Versatz zwischen den in dem Artikelmassenstrom abgegebenen Filterzigaretten verkleinert, so dass ausgangsseitig des Bandförderers 30 im Artikelpaket des Massenstroms sich eine kompakte Anordnung der aus der Filteransetzmaschine herausgeförderten Filterzigaretten ergibt.

### Bezugszeichenliste

- 10: Einrichtung
- 12: Fördertrommel
- 14: Führungswand
- 16: Führungswandabschnitt
- 20: Filterzigaretten
- 25: Federblech
- 26: Gewicht
- 27: Pendelblech
- 28: Schenkelblech
- 30: Bandförderer
- 32: Förderband
- 40: Abdeckung
- 42: Abdeckung

- M: Filteransetzmaschine
- P: Abgabepunkt

## Patentansprüche

1. Einrichtung (10) zum Fördern von stabförmigen Artikeln (20) der Tabak verarbeitenden Industrie, insbesondere Zigaretten (20) oder Filterstäbe, mit einem ersten Förderer (12) zum queraxialen Fördern von Artikeln (20) in einem einlagigen Strom und einem in Förderrichtung stromab angeordneten zweiten Förderer (30) zum queraxialen Fördern von Artikeln (20) in einem mehrlagigen Strom, wobei zwischen dem ersten Förderer (12) und dem zweiten Förderer (30) ein Transferbereich mit einer ortsfesten Führungswand (14, 16) ausgebildet ist, **dadurch gekennzeichnet, dass** im Transferbereich ein Federmaterialstreifen (25) und ein Gegenlager (27) für den Federmaterialstreifen (25) vorgesehen sind, wobei der Federmaterialstreifen (25) in der Anfangsposition im Zusammenwirken mit der Führungswand (14, 16) einen Kanal zur Aufnahme von einer einlagigen Reihe queraxial hintereinander angeordneter Artikel (20) ausbildet und der Federmaterialstreifen (25) in einer Arbeitsposition im Kontakt mit dem mehrlagigen Strom an das Gegenlager (27) sich anlegt, wobei der erste Förderer (12) als Fördertrommel (12) ausgebildet ist.

2. Einrichtung (10) nach Anspruch 1, **dadurch gekennzeichnet, dass** der Kanal zwischen Führungswand (14) und dem Federmaterialstreifen (25) in der Anfangsposition im unbefüllten Zustand sich zwischen dem ersten Förderer (12) und dem zweiten Förderer (30) verjüngt.

3. Einrichtung (10) nach Anspruch 1 oder 2, **dadurch gekennzeichnet, dass** das Gegenlager (27) steifer als der Federmaterialstreifen (25) ausgebildet ist.

4. Einrichtung (10) nach einem der Ansprüche 1 bis 3, **dadurch gekennzeichnet, dass** der Federmaterialstreifen (25) vorgespannt oder vorspannbar ist.

5. Einrichtung (10) nach einem der Ansprüche 1 bis 4, **dadurch gekennzeichnet, dass** das Gegenlager (27) gekrümmt ausgebildet ist und/oder an einem freien Ende abgewinkelt ausgebildet ist.

6. Einrichtung (10) nach einem der Ansprüche 1 bis 5, **dadurch gekennzeichnet, dass** das Gegenlager (27) verschwenkbar ausgebildet ist, wobei insbesondere wenigstens ein Anschlagpunkt zur Begrenzung der Schwenkbewegung des Gegenlagers (27) vorgesehen ist.

7. Einrichtung (10) nach einem der Ansprüche 1 bis 6, **dadurch gekennzeichnet, dass** der Federmaterialstreifen (25) aus Metall besteht und/oder dass das Gegenlager (27) als Streifen, vorzugsweise aus Metall, ausgebildet ist.

8. Einrichtung (10) nach einem der Ansprüche 1 bis 7, **dadurch gekennzeichnet, dass** der zweite Förderer (30) als Bandförderer (30) ausgebildet ist.

9. Einrichtung (10) nach einem der Ansprüche 1 bis 8, **dadurch gekennzeichnet, dass** der Federmaterialstreifen (25) seitlich durch zwei Abdeckungen (40, 42) begrenzt ist, wobei insbesondere der horizontale Abstand zwischen den Abdeckungen (40, 42) in Förderrichtung der stabförmigen Artikel (20) sich vergrößert.

10. Anlage der Tabak verarbeitenden Industrie mit einer Einrichtung nach einem der Ansprüche 1 bis 9.

## Claims

1. Device (10) for conveying rod-shaped articles (20) of the tobacco-processing industry, in particular cigarettes (20) or filter rods, comprising a first conveyor (12) for the transverse axial conveying of articles (20) in a single-layer stream and a second conveyor (30), arranged downstream in the conveying direction, for the transverse axial conveying of articles (20) in a multilayer stream, wherein a transfer region having a stationary guide wall (14, 16) is formed between the first conveyor (12) and the second conveyor (30), **characterized in that** a spring material strip (25) and a counter-bearing (27) for the spring material strip (25) are provided in the transfer region, wherein the spring material strip (25), in the starting position and in collaboration with the guide wall (14, 16), forms a channel for receiving a single-layer row of articles (20) arranged one behind the other in a transverse axial manner, and the spring material strip (25), in a working position in contact with the multilayer stream, bears against the counter-bearing (27), wherein the first conveyor (12) is designed as a conveyor drum (12).

2. Device (10) according to claim 1, **characterized in that** the channel between the guide wall (14) and the spring material strip (25), in the starting position and in the unfilled state, tapers between the first conveyor (12) and the second conveyor (30).

3. Device (10) according to claim 1 or 2, **characterized in that** the counter-bearing (27) is more rigid than the spring material strip (25).

4. Device (10) according to any one of claims 1 to 3, **characterized in that** the spring material strip (25) is or can be pretensioned.

5. Device (10) according to any one of claims 1 to 4, **characterized in that** the counter-bearing (27) is curved and/or is angled at a free end.

6. Device (10) according to any one of claims 1 to 5, **characterized in that** the counter-bearing (27) is pivotable, wherein in particular at least one stop point is provided for limiting the pivoting movement of the counter-bearing (27).

7. Device (10) according to any one of claims 1 to 6, **characterized in that** the spring material strip (25) is made of metal and/or **in that** the counter-bearing (27) is designed as a strip, preferably made of metal.

8. Device (10) according to any one of claims 1 to 7, **characterized in that** the second conveyor (30) is designed as a belt conveyor (30).

9. Device (10) according to any one of claims 1 to 8, **characterized in that** the spring material strip (25) is delimited laterally by two barriers (40, 42), wherein in particular the horizontal distance between the barriers (40, 42) increases in the conveying direction of the rod-shaped articles (20).

10. System for the tobacco-processing industry, including a device according to any one of claims 1 to 9.

## Revendications

1. Dispositif (10) pour transporter des articles (20) en forme de bâtonnets de l'industrie de transformation du tabac, en particulier des cigarettes (20) ou des bâtonnets-filtres, comportant un premier transporteur (12) pour le transport d'articles (20), transversalement à leur axe, selon un flux monocouche, et un deuxième transporteur (30), disposé en aval dans la direction du transport, pour le transport d'articles (20), transversalement par rapport à leur axe, selon un flux multicouche, dans lequel entre le premier transporteur (12) et le deuxième transporteur (30) est configurée une zone de transport comportant un panneau de guidage (14, 16) fixe en position, **caractérisé en ce qu'**il est prévu dans la zone de transfert une bande (25) en matériau élastique et une butée (27) pour la bande (25) en matériau élastique, la bande (25) en matériau élastique formant, dans la position de départ, en coopération avec le panneau de guidage (14, 16), un canal destiné à recevoir une rangée monocouche d'articles (20) disposés les uns derrière les autres transversalement par rapport à leur axe, et la bande (25) en matériau élastique s'appuyant, dans une position de travail en contact avec le flux multicouche, contre la butée (27), dans lequel le premier transporteur (12) est configuré comme un tambour transporteur (12).

2. Dispositif (10) selon la revendication 1, **caractérisé en ce que** le canal entre le panneau de guidage (14) et la bande (25) en matériau élastique se rétrécit, dans la position de départ, à l'état non rempli, entre le premier transporteur (12) et le deuxième transporteur (30).

3. Dispositif (10) selon la revendication 1 ou 2, **caractérisé en ce que** la butée (27) est conçue plus rigide que la bande (25) en matériau élastique.

4. Dispositif (10) selon l'une des revendications 1 à 3, **caractérisé en ce que** la bande (25) en matériau élastique est précontrainte ou peut être précontrainte.

5. Dispositif (10) selon l'une des revendications 1 à 4, **caractérisé en ce que** la butée (27) est configurée incurvée, et/ou est configurée coudée en une extrémité libre.

6. Dispositif (10) selon l'une des revendications 1 à 5, **caractérisé en ce que** la butée (27) est conçue de façon à pouvoir pivoter, au moins un point d'arrêt étant en particulier prévu pour délimiter le mouvement de pivotement de la butée (27).

7. Dispositif (10) selon l'une des revendications 1 à 6, **caractérisé en ce que** la bande (25) en matériau élastique est constituée d'un métal, et/ou que la butée (27) est conçue comme une bande, de préférence en un métal.

8. Dispositif (10) selon l'une des revendications 1 à 7, **caractérisé en ce que** le deuxième transporteur (30) est configuré comme un transporteur à bande (30).

9. Dispositif (10) selon l'une des revendications 1 à 8, **caractérisé en ce que** la bande (25) en matériau élastique est latéralement délimitée par deux recouvrements (40, 42), en particulier la distance horizontale entre les recouvrements (40, 42) augmentant dans la direction de transport des articles (20) en forme de bâtonnets.

10. Installation de l'industrie de transformation du tabac, comportant un dispositif selon l'une des revendications 1 à 9.
